# FASCICULE DE BREVET EUROPEEN

(11) **EP 3 137 252 B1**
(45) Date de publication et mention de la délivrance du brevet: **04.07.2018**
(21) Numéro de dépôt: 15714877.6
(22) Date de dépôt: 19.03.2015
(51) Int. Cl.: B23K 9/09, B23K 9/23, B23K 33/00, B62D 25/06, B62D 27/02

(54) **PROCEDE D'ASSEMBLAGE PAR SOUDAGE THERMIQUE DISCONTINU LE LONG D'UN JOINTD'UNE TÔLE EN ACIER AVEC UNE TÔLE EN ALUMINIUM AVEC DEPOSE D'UN MATERIAU PROPRE A FORMER UN JOINT ETANCHE SUR LE JOINT ; ENSEMBLE CORRESPONDANT**
VERFAHREN ZUR MONTAGE DURCH DISKONTINUIERLICHES THERMISCHES SCHWEISSEN ENTLANG DER NAHT EINES STAHLBLECHS MIT EINEM ALUMINIUMBLECH MIT DEPONIERUNG EINES SAUBEREN MATERIALS ZUR FORMUNG EINER DICHTEN VERBINDUNG AUF DER NAHT ; ENTSPRECHENDE ANORDNUNG
METHOD OF ASSEMBLY BY DISCONTINUOUS THERMAL WELDING ALONG THE JOIN OF A STEEL SHEET WITH AN ALUMINIUM SHEET, WITH DEPOSITION OF A CLEAN MATERIAL TO FORM A SEALED JOINT ON THE JOIN ; CORRESPONDING ASSEMBLY

(30) Priorité: 30.04.2014 FR 1453946
(43) Date de publication de la demande: 08.03.2017
(73) Titulaire: PSA Automobiles SA, 78300 Poissy (FR)
(72) Inventeur: FEINER, David, F-95120 Ermont (FR); LENOIR, Romaric, F-78560 Le Port Marly (FR)
(74) Mandataire: Fosse, Danièle
(86) Numéro de dépôt international: PCT/FR2015/050668
(87) Numéro de publication internationale: WO 2015/166149

(56) Documents cités:
- WO-A1-2013/126478
- DE-A1-102006 030 507
- JP-A- S59 186 776
- KR-A- 20120 031 857
- US-A1- 2008 178 467

## Description

La présente invention concerne un procédé d'assemblage d'éléments en tôles dont l'une est en acier et l'autre en aluminium et un ensemble de deux éléments conformément au préambule des revendications 1 et 8 (voir, par exemple, DE 10 2006 030 507 A1).

Dans le domaine automobile et plus particulièrement dans le cadre d'une réduction de la consommation énergétique et donc d'une réduction des émissions de CO₂, on souhaite alléger le plus possible les véhicules automobiles. Ainsi, dans l'optique d'allégement des structures, il peut être envisagé de remplacer certains constituants en acier par des éléments en alliage d'aluminium plus légers.

Pour assembler deux constituants dont l'un est en acier et l'autre à base d'aluminium, des solutions d'assemblage mécaniques dites classiques (rivetage, clinchage, vissage) sont connues et applicables. Cependant, il peut être nécessaire, pour des questions de rigidité de réaliser des liaisons continues entre ces éléments.

La métallurgie des alliages Fe-AI étant extrêmement complexe, tout assemblage par fusion entre ces deux matériaux nécessite l'utilisation de technologies particulières et la mise en place de modes opératoires dédiés.

De même, les études réalisées ont démontré la nécessité d'adapter la conception des joints soudés aux spécificités du soudage acier / aluminium.

En effet, l'acier et l'aluminium sont des matériaux qui présentent des propriétés physiques très différentes ce qui rend complexe tout assemblage par fusion. Les principales différences sont les suivantes :

L'écart entre les températures de fusion, Al de 660°C et Fe de 1536°C est considérable et s'accroit encore pour les alliages d'aluminium contenant du silicium. Cet écart très pénalisant en soudage où l'on recherche plutôt la fusion des deux matériaux, peut toutefois s'avérer bénéfique dans le cas d'un brasage (dans ce cas on a une fusion de l'aluminium tandis que l'acier reste solide).

Les dilatations linéiques sont de 23,1.10-6 K-1 pour Al et de 12,6.10-6 K-1 pour Fe (ferrite). Les différences de déformation engendrées au refroidissement entraineront des niveaux de contraintes (traction ou compression) très importantes dans les soudures, ce qui favorise grandement l'apparition de fissures.

Par ailleurs, les propriétés thermiques de l'aluminium et de l'acier sont également différentes, engendrant des comportements thermiques des deux matériaux très différents.

| Capacité thermique massique | | Conductivité thermique |
|---|---|---|
| Al | 897 J.Kg-1.K-1 | 237 W.m-1.K-1 |
| Fe | 450 J.Kg-1.K-1 (ferrite) | 75 W.m-1.K-1 (ferrite) |

Ainsi, lorsqu'on applique une source de chaleur, la répartition énergétique présente une forte dissymétrie de part et d'autre de la liaison. Les conditions opératoires de soudage sont donc toujours très complexes.

Une autre difficulté à réaliser un soudage acier / aluminium est issue du fait qu'il est impossible d'obtenir un alliage ductile entre ces deux matériaux. En effet, la solubilité de l'aluminium dans l'acier étant quasi-nulle, il se forme très rapidement des composés intermétalliques fragiles qui rendent impossible toute utilisation mécanique des alliages formés. Le diagramme d'équilibre prévoit la formation de nombreux composés définis ou intermétalliques.

La solution communément adoptée pour réaliser un assemblage est donc, non pas de souder, au sens propre du terme, l'acier et l'aluminium mais de réaliser une liaison par diffusion, assimilable à du brasage. Ainsi, l'aluminium est porté à l'état liquide alors que l'acier reste solide.

Bien qu'il soit difficile d'éviter la formation des composés intermétalliques, il est toutefois possible d'en maitriser la nature et l'épaisseur de couche en jouant sur l'apport calorifique à l'assemblage, c'est-à-dire en utilisant des technologies de soudage de type arc CMT(Cold Metal Transfer) ou laser.

Toutefois, les analyses métallurgiques ont confirmé la présence des composés intermétalliques entre le métal d'apport et l'acier. Ainsi, bien qu'il ait été démontré que l'épaisseur de la couche formée soit maitrisable par l'utilisation de technologies CMT ou laser, il n'en reste pas moins que cette couche est fragile et qu'il s'avère nécessaire d'adapter la conception des joints soudés aux spécificités de cette liaison.

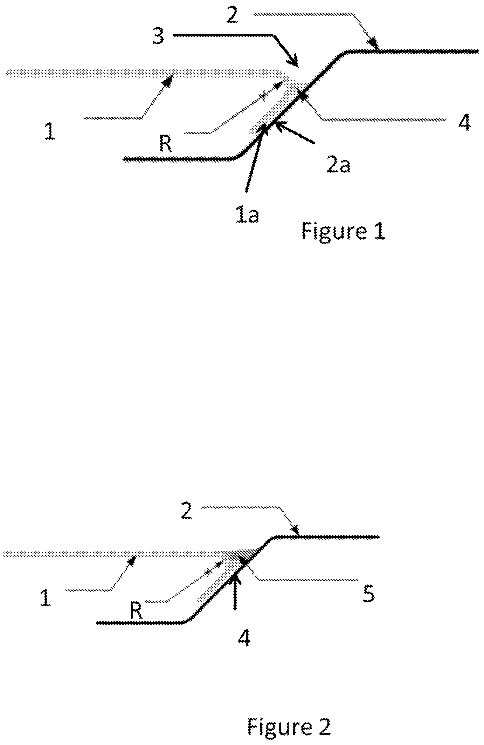

Parmi les configurations de plan de joint, on peut utiliser celle à clin (voir la figure 1) qui se comporte très bien en traction cisaillement. Toutefois, une telle configuration ne supportera pas de contrainte lorsque cet assemblage sera sollicité perpendiculairement à la couche (en traction pure selon la direction F) ou bien en pelage.

Dans DE 100 17 453, on propose un procédé de liaison par soudage entre une tôle d'acier et une tôle d'aluminium en utilisant un matériau d'apport, dans lequel la tôle d'acier est pourvue d'un revêtement au moins dans la zone de la liaison. Ce revêtement est constitué soit de zinc soit d'aluminium et permet ainsi une liaison thermique avec un alliage Zn-Al. Il est ainsi possible de réaliser une liaison thermique continue entre les deux tôles en acier et en aluminium.

Toutefois, dans le cadre d'un assemblage entre deux éléments en tôle d'acier pour l'un et en tôle d'aluminium pour l'autre tel qu'un pavillon de toit en aluminium et un côté d'habitacle en acier pour un véhicule automobile, une telle liaison thermique n'est pas réalisable du fait des risques de fissures pouvant survenir au niveau de la soudure ainsi réalisée.

L'invention a donc pour objet de proposer un procédé qui permet d'obtenir un assemblage d'éléments en tôles en matériaux différents présentant des comportements thermiques différents, telles qu'une tôle acier et une tôle aluminium et ce, tout en respectant les caractéristiques d'assemblage (résistance en traction, à la rupture).

Un procédé d'assemblage de deux éléments en tôles dont l'un est en acier et l'autre en aluminium selon l'invention est défini dans la revendication 1, le procédé comprenant une étape de soudage thermique des deux éléments en tôle en utilisant un matériau d'apport, où l'on ménage entre les deux éléments en tôle un plan de joint en forme de V, on fixe les deux éléments en tôle en déposant un cordon de soudure dans le fond du plan de joint de manière discontinue le long dudit plan de joint, puis on dépose dans le plan de joint un matériau propre à former un joint étanche sur toute la longueur dudit plan de joint.

Ainsi, de manière avantageuse, le soudage réalisé de manière discontinue présente une tenue mécanique grandement améliorée, dans la mesure où les parties de tôles non soudées permettent d'absorber les différences de dilatation entre les matériaux tandis que le matériau formant le joint permet de rendre étanche le plan de joint et donc l'assemblage tout en masquant la discontinuité de la soudure.

De manière à pouvoir réaliser un tel procédé d'assemblage, on ménage de préférence un plan de joint en forme de V entre les deux éléments à assembler dont la profondeur permet à la fois de créer un cordon de soudure de manière discontinue puis de recevoir le matériau formant le joint de manière à la fois à combler les espaces inter cordons de soudure et à également à recouvrir lesdits cordons de soudure pour masquer ceux-ci.

Un tel joint est de préférence constitué d'un matériau organique souple du type mastic, thermoplastique, par exemple un polychlorure de vinyle (PVC).

Un ensemble de deux éléments en tôles dont l'un est en acier et l'autre en aluminium selon l'invention est défini dans la revendication 8, les deux éléments étant assemblés selon un procédé d'assemblage selon l'invention décrite ci-dessus et présentant entre eux un plan de joint en forme de V, un cordon de soudure déposé de manière discontinue dans le fond du plan de joint et le long dudit plan de joint, un matériau propre à former un joint étanche, déposé sur toute la longueur dudit plan de joint, comblant les espaces inter cordons de soudure et masquant lesdits cordons de soudure.

L'invention vise également un véhicule automobile tel que défini dans la revendication 9.

On décrira maintenant l'invention plus en détails en référence au dessin dans lequel :
La figure 1 représente une vue en coupe d'une première étape du procédé d'assemblage selon l'invention ;
La figure 2 représente une vue en coupe d'une seconde étape du procédé d'assemblage ;
La figure 3 représente une vue en perspective du dessus d'un véhicule dont le pavillon de toit est en cours d'assemblage selon l'invention ; et
La figure 4 représente une vue selon la figure 3 une fois le procédé d'assemblage terminé.

Dans l'exemple de réalisation représenté, on assemble un pavillon de toit 1 de véhicule automobile en aluminium sur un côté d'habitacle 2 du véhicule en acier.

Le pavillon 1 est obtenu à partir d'un flan de tôle en aluminium, dans l'exemple présenté d'une épaisseur de l'ordre de 1,5 mm, de préférence par emboutissage de manière que chaque bord longitudinal 1a est recourbé vers l'intérieur avec, de préférence, un rayon de courbure R de l'ordre de 4 mm. Le côté d'habitacle 2 est réalisé à partir d'une tôle en acier, également par emboutissage. Lors de l'assemblage, le bord recourbé 1a est amené contre une face 2a du côté d'habitacle 2.

Le plan de joint 3 ménagé entre le bord 1a du pavillon 1 et la face 2a du côté d'habitacle 2 a sensiblement une forme en V et, du fait du rayon de courbure R du bord 1a du pavillon, ce plan de joint 3 présente une profondeur de l'ordre de 7 mm dans l'exemple représenté.

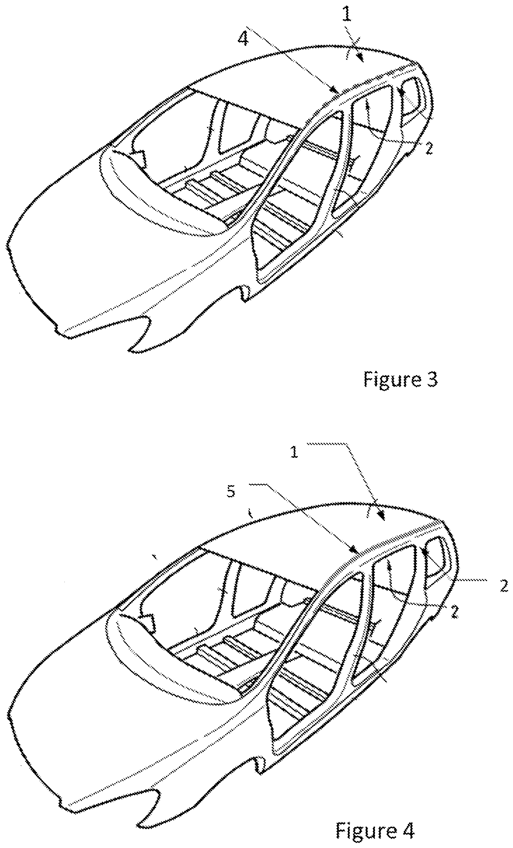

Selon le principe de la présente invention, le bord 1a du pavillon de toit 1 est rigidement fixé à la face 2a du côté d'habitacle par un cordon de soudure 4 obtenu par un procédé de soudage dit soudage « CMT », connu en soi. Comme mieux représenté sur le dessin de la figure 3, ce cordon de soudure 4 est déposé dans le fond du plan de joint 3 et de manière discontinue le long dudit plan de joint 3 sur la face 2a du côté d'habitacle 2 et sur le bord recourbé 1a du pavillon.

Par soudage « CMT », on entend un procédé de soudage à l'arc électrique qui est une variante des procédés de soudage de type « MIG/MAG » (acronymes en langue anglaise de « Metal Inert Gas » et « Metal active Gas ») dans lesquels la fusion des métaux est obtenue par l'énergie calorifique dégagée par l'arc électrique qui éclate dans une atmosphère de protection entre un fil électrode fusible (métal d'apport constitué d'Aluminium, Silicium et manganèse et les pièces à assembler. Dans le procédé de soudage « CMT », fruit d'une adaptation de ces procédés MIG/MAG aux besoins de l'assemblage de tôles d'acier et de tôles d'aluminium, le matériau de base aluminium fusionne en même temps que le matériau d'apport aluminium et la fusion humecte l'acier galvanisé.

Le soudage CMT est réalisé de sorte que le point d'impact du fil (et de l'arc électrique) est orienté sur la tôle aluminium constituant donc le pavillon. L'angle ainsi réalisé par rapport au plan de joint est de 90°.

L'énergie de soudage (vitesse de soudage, intensité et tension) est mise en oeuvre de manière appropriée et maitrisée pour limiter la création d'intermétallique entre l'aluminium et l'acier. Une oscillation, par avance et recul de la torche de soudage est mise en oeuvre pour réaliser le cordon de soudure.

Le procédé CMT comparativement à un procédé MIG/MAG conventionnel permet de diminuer de 30 à 50% l'énergie de soudage pour obtenir une liaison similaire.

Le procédé « CMT » est donc un procédé qui offre des qualités mécaniques et technologiques très satisfaisantes. Il est, de plus, très stable, très reproductible et, par conséquent, rentable économiquement.

Ainsi, on réalise des cordons de soudure 4 présentant de préférence une hauteur de 4 mm, de 30 à 40 mm de longueur par exemple tous les 100 mm le long du plan de joint 3 entre le pavillon 1 et le côté d'habitacle 2. Ce soudage « en pointillés » permet que les zones non soudées du pavillon 1 et du côté d'habitacle 2 puissent absorber les différences de dilatation linéique ce qui garantit la tenue mécanique de l'assemblage.

Une fois, le soudage réalisé visible à la figure 3, on dépose au niveau du plan de joint 3, un matériau formant un joint 5 constitué d'un matériau étanche qui permet d'une part de remplir ou combler le plan de joint 3, en particulier là où il n'y a pas de cordons de soudure 4 et de masquer ainsi la discontinuité desdits cordons de soudure 4, garantissant l'étanchéité de la jonction entre le pavillon de toit 1 et le côté d'habitacle 2, ainsi que l'aspect uniforme de cette jonction qui ne nécessite pas l'ajout d'un enjoliveur.

Le procédé de soudage « CMT » permet un assemblage simple à mettre en oeuvre entre l'acier du côté d'habitacle 2 et l'aluminium du pavillon de toit 1, plus simple et plus robuste que les assemblages réalisés par voie mécanique ou par collages.

Le véhicule, obtenu par le procédé d'assemblage décrit ci-dessus, présente de nombreux avantages, parmi lesquels les avantages suivants
- il permet de réaliser un important gain en masse par rapport à un véhicule dont le pavillon est réalisé en tôle d'acier, ce gain pouvant atteindre environ 4 kg par véhicule,
- il permet, du fait de ce gain en masse, de diminuer les émissions de CO₂ du véhicule ainsi réalisé selon l'invention.

## Revendications

1. Procédé d'assemblage de deux éléments (1, 2) en tôles dont l'une est en acier et l'autre en aluminium, comprenant une étape de soudage thermique des deux éléments en tôle en utilisant un matériau d'apport, caractérisé en ce ce qu'on ménage entre les deux éléments en tôle (1, 2) un plan de joint (3) en forme de V, on fixe les deux éléments en tôle (1, 2) en déposant un cordon de soudure (4) dans le fond du plan de joint (3) de manière discontinue le long dudit plan de joint (3), puis on dépose dans le plan de joint (3) un matériau propre à former un joint étanche (5) sur toute la longueur dudit plan de joint (3).

2. Procédé selon la revendication 1, **caractérisé en ce que** l'élément en tôle d'aluminium est un pavillon de toit (1) obtenu à partir d'un flan de tôle en aluminium, par emboutissage de manière que chaque bord longitudinal (1a) est recourbé vers l'intérieur.

3. Procédé selon la revendication 2, **caractérisé en ce que** le flan de tôle (1) en aluminium présente une épaisseur de 1,5 mm et le rayon de courbure R du bord longitudinal (1a) est de l'ordre de 4 mm.

4. Procédé selon l'une des revendications 2 et 3, **caractérisé en ce que** l'élément en tôle d'acier est un côté d'habitacle (2) obtenu à partir d'un flan de tôle en acier, par emboutissage.

5. Procédé selon la revendication 4, **caractérisé en ce que** le bord recourbé (1a) est amené contre une face (2a) du côté d'habitacle (2) de sorte que le plan de joint (3) entre les deux éléments à assembler a une forme en V.

6. Procédé selon l'une des revendications 1 à 5, **caractérisé en ce que** le procédé de soudage est un procédé CMT.

7. Procédé selon l'une des revendications 1 à 6, **caractérisé en ce que** le matériau d'étanchéité est un matériau organique souple tel que mastic, thermoplastique.

8. Ensemble de deux éléments (1, 2) en tôles dont l'une est en acier et l'autre en aluminium, **caractérisé en ce que** les deux éléments sont assemblés selon un procédé d'assemblage selon l'une des revendications 1 à 7, et présentent entre eux un plan de joint (3) en forme de V, un cordon de soudure (4) déposé de manière discontinue dans le fond du plan de joint (3) et le long dudit plan de joint, et un matériau propre à former un joint étanche (5), déposé sur toute la longueur dudit plan de joint (3), comblant les espaces inter cordons de soudure et masquant lesdits cordons de soudure.

9. Véhicule automobile comportant un pavillon de toit (1) obtenu à partir d'un flan de tôle en aluminium et deux côtés d'habitacle (2) obtenus respectivement à partir d'un flan de tôle en acier, **caractérisé en ce que** le pavillon de toit (1) et chaque côté d'habitacle (2) constituent un ensemble selon la revendication 8.

## Patentansprüche

1. Verfahren zum Zusammenfügen von zwei Elementen (1, 2) aus Blechen, von welchen eines aus Stahl und das andere aus Aluminium besteht, das einen thermischen Schweißschritt der zwei Elemente aus Blech umfasst, indem ein Zusatzmaterial verwendet wird, **dadurch gekennzeichnet, dass** zwischen den zwei Elementen aus Blech (1, 2) eine Dichtungsebene (3) in V-Form eingerichtet wird, die zwei Elemente aus Blech (1, 2) befestigt werden, indem eine Schweißnaht (4) in dem Grund der Dichtungsebene (3) diskontinuierlich entlang der Dichtungsebene (3) deponiert wird, dann in der Dichtungsebene (3) ein Material deponiert wird, das geeignet ist, um eine dichte Dichtung (5) auf der gesamten Länge der Dichtungsebene (3) zu bilden.

2. Verfahren nach Anspruch 1, **dadurch gekennzeichnet, dass** das Element aus Aluminiumblech ein Fahrzeughimmel (1) ist, der ausgehend von einer Platte aus Aluminiumblech durch Stanzen derart erhalten wird, dass jeder Längsrand (1a) nach innen umgebogen ist.

3. Verfahren nach Anspruch 2, **dadurch gekennzeichnet, dass** die Aluminiumplatte (1) eine Stärke von 1,5 mm aufweist, und dass der Krümmungsradius R des Längsrands (1a) in der Größenordnung von 4 mm liegt.

4. Verfahren nach einem der Ansprüche 2 und 3, **dadurch gekennzeichnet, dass** das Element aus Stahlblech eine Fahrgastzellenseite (2) ist, die ausgehend von einer Stahlblechplatte durch Stanzen erhalten wird.

5. Verfahren nach Anspruch 4, **dadurch gekennzeichnet, dass** der umgebogene Rand (1a) gegen eine Fläche (2a) der Fahrgastzellenseite (2) derart gebracht wird, dass die Dichtungsebene (3) zwischen den beiden Elementen, die zusammenzufügen sind, eine V-Form hat.

6. Verfahren nach einem der Ansprüche 1 bis 5, **dadurch gekennzeichnet, dass** das Schweißverfahren ein CMT-Verfahren ist.

7. Verfahren nach einem der Ansprüche 1 bis 6, **dadurch gekennzeichnet, dass** das Abdichtmaterial ein biegsames organisches Material wie Kitt, Thermoplastmaterial ist.

8. Baugruppe aus zwei Elementen (1, 2) aus Blechen, von welchen eines aus Stahl und das andere aus Aluminium besteht, **dadurch gekennzeichnet, dass** die zwei Elemente gemäß einem Zusammenfügeverfahren nach einem der Ansprüche 1 bis 7 zusammengefügt werden und zwischen einander eine Dichtungsebene (3) in V-Form aufweisen, eine Schweißnaht (4) die diskontinuierlich in dem Grund der Dichtungsebene (3) und entlang der Dichtungsebene deponiert wird, und ein Material, das geeignet ist, um eine dichte Dichtung (5) zu bilden, das auf der gesamten Länge der Dichtungsebene (3) deponiert wird, das die Räume zwischen Schweißnähten füllt und die Schweißnähte abdeckt.

9. Kraftfahrzeug, das einen Dachhimmel (1) umfasst, der ausgehend von einer Blechplatte aus Aluminium und zwei Fahrgastzellenseiten (2), die jeweils ausgehend von einer Blechplatte aus Stahl erhalten werden, erhalten wird, **dadurch gekennzeichnet, dass** der Dachhimmel (1) und jede Fahrgastzellenseite (2) eine Baugruppe nach Anspruch 8 bilden.

## Claims

1. A method of assembly of two sheet metal elements (1, 2), one of which is made of steel and the other of aluminium, including a thermal welding step of the two sheet metal elements using a filler material, **characterized in that** a V-shaped joining face (3) is arranged between the two sheet metal elements (1, 2), the two sheet metal elements (1, 2) are fixed by depositing a weld bead (4) in the base of the joining face (3) in a discontinuous manner along said joining face (3), then a material suitable for forming a sealed joint (5) over the entire length of said joining face (3) is deposited in the joining face (3).

2. The method according to claim 1, **characterized in that** the aluminium sheet metal element is a roof panel (1) obtained from a blank of aluminium sheet metal by stamping such that each longitudinal edge (1a) is bent towards the interior.

3. The method according to claim 2, **characterized in that** the blank of aluminium sheet metal (1) has a thickness of 1.5 mm and the radius of curvature R of the longitudinal edge (1a) is in the order of 4 mm.

4. The method according to one of claims 2 and 3, **characterized in that** the element made of steel sheet metal is a passenger compartment side (2) obtained from a blank of steel sheet metal, by stamping.

5. The method according to claim 4, **characterized in that** the bent edge (1a) is brought against a face (2a) of the passenger compartment side (2) such that the joining face (3) between the two elements which are to be assembled is V-shaped.

6. The method according to one of claims 1 to 5, **characterized in that** the welding method is a CMT method.

7. The method according to one of claims 1 to 6, **characterized in that** the sealing material is a flexible organic material such as mastic, thermoplastic.

8. An assembly of two sheet metal elements (1, 2), one of which is made of steel and the other of aluminium, **characterized in that** the two elements are assembled according to an assembly method according to one of claims 1 to 7, and having between them a V-shaped joining face (3), a weld bead (4) deposited discontinuously in the base of the joining face (3) and along said joining face, and a material suitable for forming a sealed joint (5), deposited over the entire length of said joining face (3), filling the spaces between weld beads and masking said weld beads.

9. A motor vehicle comprising a roof panel (1) obtained from a blank of aluminium sheet metal and two passenger compartment sides (2) obtained respectively from a blank of steel sheet metal, **characterized in that** the roof panel (1) and each passenger compartment side (2) constitute an assembly according to claim 8.
